Europäisches Patentamt

European Patent Office

Office européen des brevets

(11) Publication number: **0 017 382**

A1

## EUROPEAN PATENT APPLICATION

(21) Application number: 80300832.5

(22) Date of filing: 19.03.80

(51) Int. Cl.³: **G 01 S 15/89**
**A 61 B 10/00**

(30) Priority: 20.03.79 GB 7909686

(43) Date of publication of application:
15.10.80 Bulletin 80/21

(84) Designated Contracting States:
DE FR NL

(71) Applicant: The General Electric Company Limited
1 Stanhope Gate
London W1A 1EH(GB)

(72) Inventor: Brown, Harold Thomas
82 Mount Park Road Eastcote
Pinner Middlesex, HA5 2JU(GB)

(72) Inventor: Groves, Raymond Derek
18 Farmdale Road Greenwich
London, S.E.10(GB)

(72) Inventor: Reid, Terence Patrick
3 Selwood Way Downley
High Wycombe Buckinghamshire(GB)

(74) Representative: Pope, Michael Bertram Wingate
Central Patent Department The General Electric
Company Limited Hirst Research Centre
Wembley Middlesex HA9 7PP(GB)

(54) Ultrasonic imaging system.

(57) A multi-element transducer array ultrasonic imaging system in which a selected group of adjacent elements is used, the selected group being sequenced along the array to achieve a scanning action, and signals to and/or from the elements of the selected group being delayed so as to focus the selected group to a desired focal length in transmission and/or reception respectively, including a respective transmitter circuit (T) connected with each element (L) of the array, each transmitter being arranged to be enabled by the application of an enable signal thereto and arranged to produce a transmission pulse which is applied to its connected element upon the application of a control signal to the transmitter while the transmitter is in the enabled state.

Fig.1.

-1-

This invention relates to ultrasonic imaging systems for producing ultrasonic images of objects.

In particular the invention relates to multi-element transducer array ultrasonic imaging systems in which a selected group of adjacent elements is used, the selected group being sequenced along the array to achieve a scanning action, and signals to and/or from the elements of the selected group being delayed so as to focus the selected group to a desired focal length in transmission and/or reception respectively. Such a system will hereinafter be referred to as a system of the kind specified.

In known systems of the kind specified, in transmission high voltage pulses for application to the elements of the selected active group are produced by a single set of transmitters (usually equal in number to half the number of elements in the active group). The high voltage pulses from the transmitters are applied to the correct elements of the array via respective independently controllable switches, one switch being connected in the signal path of each element. Thus the selection of the switches determines the active group of elements in transmission and the same switches are used to determine the active group in reception.

Thus since the switching is performed with high voltage signals the switches must be high voltage components and to ensure good system performance the switches should have a low "on" resistance to reduce losses in reception and should have a low noise contribution so as to provide a good signal/noise ratio in reception.

It is an object of the invention to provide a system of the kind specified wherein the above constraints on good system performance are obviated.

-2-

In accordance with the invention a system of the kind specified includes a respective transmitter connected with each element of the array, each transmitter being arranged to be enabled by the application of an enable signal thereto and arranged to produce a transmission pulse which is applied to its connected element upon the application of a control signal while the transmitter is in the enabled state.

Preferably there is also associated with each element a receiver switch arranged to be controlled by the output voltage of the respective transmitter so as to be closed by the quiescent output of said transmitter and to be opened by the transmission pulse output of said transmitter.

Preferably each said transmitter comprises an AND gate to the inputs of which a control signal and an enable signal are applied, a switch arranged to be controlled by the output of the AND gate and connected between a first potential and a second different potential, and a capacitance having one terminal connected to the switch so as to be     at     the first potential when the switch is closed and to be     at     the second potential when the switch is open, the other terminal of the capacitance forming the transmitter output.   Said transmitters are preferably so arranged that their quiescent output voltages are controlled by said enable signals.  Preferabl; each said receiver switch comprises a single diode.

Preferably signals to the elements of the active group in transmission are delayed by delaying the application of control signals to the transmitters connected with the elements.

Preferably the system includes a tapped digital shift register whose input is connected to a control signal generator and the outputs of the taps of which are connected to the transmitters associated with the elements of the active group. In this way, once the taps have been chosen which give the required quadratic relationship, the focal length can be varied by varying the shift register clock frequency as desired.

A system of the kind specified in accordance with the invention will now be described, by way of example only, with reference to the accompanying drawings in which:

Figure 1 shows a schematic block diagram of part of the system;

Figure 2 shows signals appearing at various points in Figure 1; and

Figure 3 shows a circuit diagram of a transmitter of the system.

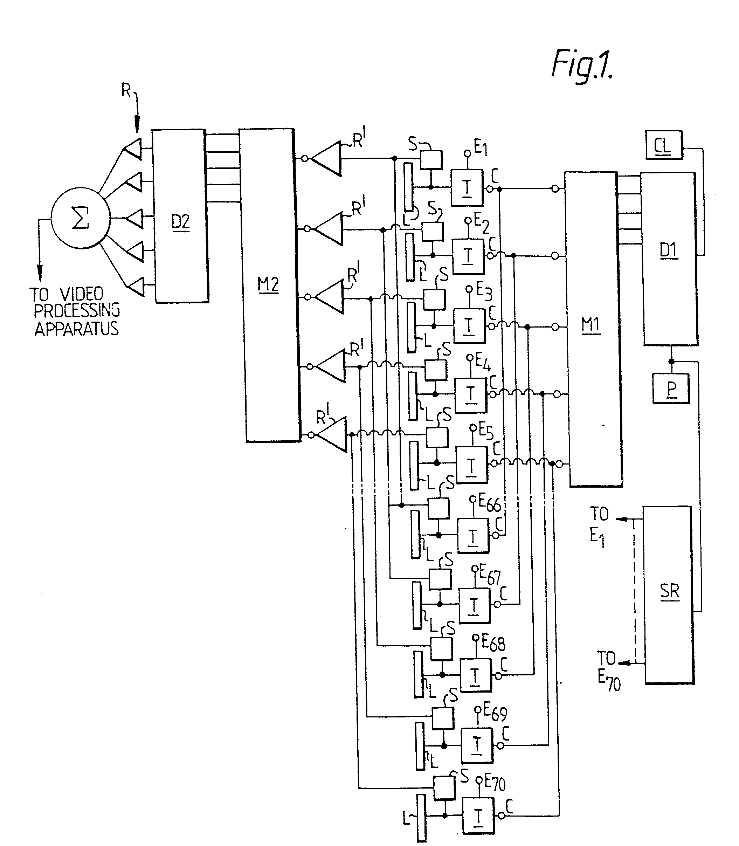

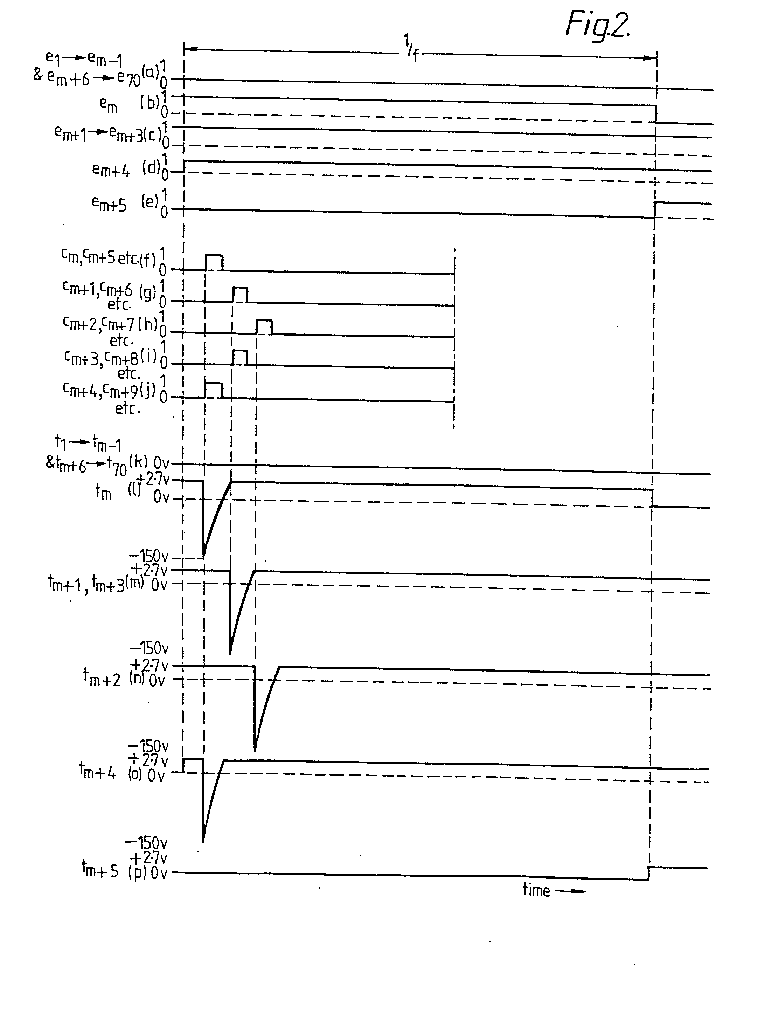

Referring firstly to Figure 1, the system for producing an ultrasonic image of an object, e.g. part of a human body, includes a linear array of 70 identical ultrasonic transducers L, only ten of which are shown. There is associated with each transducer L a transmitter circuit T (which will be described in greater detail below), each of which produces a transmission pulse in the form of a 150 V negative voltage spike (see Figures 2(l) to 2(o)) in response to the receipt of a control signal (a digital "1", see Figures 2(f) to 2(j)) applied to its input C in the presence of an enable signal (see Figures 2(a) to 2(e)) applied to its input E. The voltage spike is fed to the associated transducer L to cause the transducer to emit a pulse of ultrasonic energy.

Figure 2 shows the enable signals and control signals applied to, and the outputs from, all the transmitter circuits T of the system when five elements, m to m+4 are selected to form the active group in reception and transmission.

Figures 2(a) to 2(e) show the enable signals $e_n$ applied to the enable inputs E of the transmitter circuits

-4-

T associated with the elements of the array.

Figures 2(f) to 2(j) show the control signals $c_n$ applied to the control inputs C of the transmitter circuits T.

Figures 2(k) to 2(p) show the outputs $t_n$ from the transmitter circuits T.

A curved wavefront is caused to be emitted from the transducers L of a selected active group by delaying the application of transmission pulses to the transducers, the delay increasing from the outer elements of the active group towards the centre. The transmission pulses are delayed by delaying the control signals (as can be seen from Figures 2(f) to 2(j)) in response to which the transmission pulses are produced.

The control signals (digital "1"'s) are produced by a pulse repetition clock P : a digital "1" is produced every 1/f seconds, f being the frequency of production of ultrasonic pulses. The control signal (digital "1") is fed into a digital shift register D1 and outputs are taken from the shift register at points so spaced as to give the required quadratic relationship between the delays of the control signal (digital "1") appearing at the outputs. The quadratic relationship of the delays of the output signals having been selected by the positions of the taps along the shift register, the absolute values of the delays (and so the focal length of the emitted ultrasonic pulse) may be varied by varying the frequency of the shift register clock CL.

The output low level control signals (digital "1"'s) from the shift register D1 are fed to a digital multiplexer M1 which sequences the control signals $c_n$ to the transmitters T of the correct elements of the active group of transducers L to cause the transmitters to produce high level transmission pulses as already mentioned. The active group in reception is determined by the application of enable signals to the transmitters T associated with

-5-

the elements L of the active group.  The enable signals $e_n$ are produced from a shift register SR which is used to sequence the active group along the array.  The shift register SR is of the recirculating type and has a number of elements equal to the number of transducer elements in the array.  Each element is tapped and the taps are connected to the respective enable inputs E of the transmitters T.  Enable signals (digital "1"'s) are fed into five adjacent elements of the shift register when the system is activated and the shift register is clocked at the pulse repetition frequency f of the system.

In reception, ultrasonic signals received by the transducer elements L and converted into electrical signals are passed to the receiver part of the system via switches S in the form of high voltage diodes.  The switches are controlled by a small positive bias (e.g.+1.4 Volts) applied at the receiver inputs and by the quiescent outputs of the transmitters T as determined by the enable signals applied to the transmitters : a low positive output (e.g. + 2.7 Volts) forward biases the respective switch and turns it on, a high negative output (e.g. - 150 Volts) reverse biases the respective switch and turns it off.  In this way the diodes also protect the receiver part of the system from the high negative voltage pulses from the transmitters T because these high voltage pulses reverse bias the diodes.

Thus good signal quality in reception is obtained, since received signals pass only through the high-voltage diodes S before reaching the signal processing circuitry, diodes being well known for their low "on" resistance and low noise contribution properties.

The received signals from the transducers are conditioned in low noise receiver pre-amplifiers R', delayed by analogue delay lines, shown collectively at D2, to equalise delays from the desired focal point,

-6-

amplified in amplifiers R and summed. The summed signals are then passed to video processing apparatus (not shown) in which the signals are used to provide a video image of the object on a cathode ray tube screen in a conventional way. As in transmission the signals are passed through a multiplexer M2 to connect the correct delays into the paths of signals from the correct elements of the active group. Unlike the digital multiplexer M1 used in transmission, the multiplexer M2 is an analogue multiplexer.

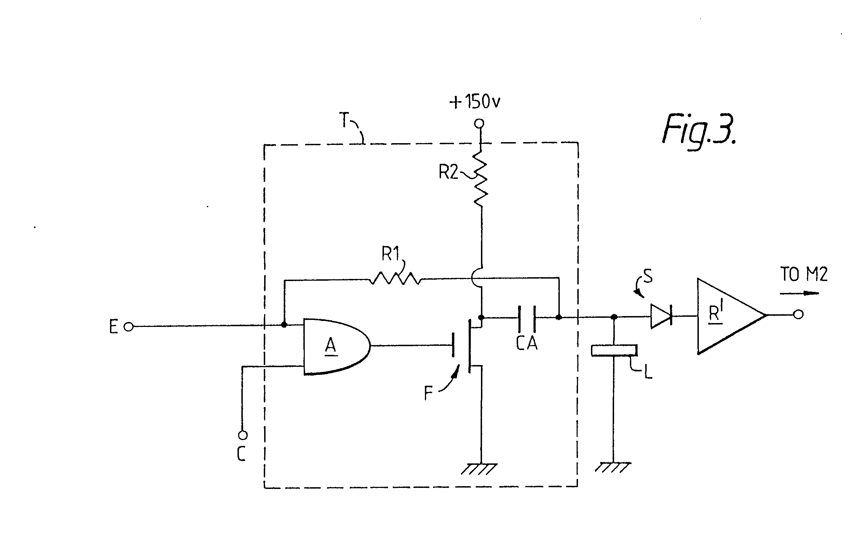

Referring now also to Figure 3, each transmitter circuit T of the system includes a two-input AND gate A whose inputs form the enable signal input E and the control signal input C of the transmitter. The output of the AND gate A is connected to the gate of a high-voltage field-effect transistor F. The source and drain of transistor F are respectively connected to earth and to a source of +150V potential through a resistor R2. The drain of transistor F is also connected to one terminal of a capacitor CA, the other terminal of which forms the output of the transmitter. The enable signal input E is connected to the output through a resistor R1.

Thus it will be appreciated that the quiescent output of the transmitter is controlled by the enable signal applied to the input E of the transmitter, the absence of an enable signal causing the output of the transmitter to fall to substantially 0V so as to prevent the diode switch S from conducting (a bias of +1.4V being applied at the receiver input), and the presence of an enable signal causing the output of the transmitter to rise to approximately +2.7V so as to allow the diode switch S to conduct.

It will also be appreciated that the transmitter produces a transmission pulse in the following way. With transistor F non-conducting (i.e. in the absence of both an enable signal and a control signal, or in the

-7-

presence of only one of them) the terminal of the capacitor CA which is connected to the drain of the transistor is charged to +150V. On the application of an enable signal the other terminal of the capacitor is charged to approximately +2.7V, producing a potential of approximately 150V across the capacitor CA. On the application of a control signal transistor F begins to conduct and the potential at the drain of the transistor falls to 0V, producing a negative voltage pulse of approximately -150V at the output of the transmitter.

The transducer elements L are mechanically focussed in a direction perpendicular to the direction of scanning of the array.

CLAIMS

1.          A system of the kind specified characterised in that the system includes a respective transmitter (T) connected with each element (L) of the array, each transmitter being arranged to be enabled by the application of an enable signal (e) thereto and arranged to produce a transmission pulse (t) which is applied to its connected element upon the application of a control signal (c) to the transmitter while the transmitter is in the enabled state.

2.          A system according to claim 1 characterised in that there is also connected with each element a respective receiver switch (S) arranged to be controlled by the output voltage of the respective transmitter so as to be closed by the quiescent output of said transmitter and to be opened by the transmission pulse output of said transmitter.

3.          A system according to claim 1 or 2 characterised in that each said transmitter comprises an AND gate (A) to the inputs of which a control signal and an enable signal are applied, a switch (F) arranged to be controlled by the output of the AND gate and connected between a first potential (150V) and a second different potential (OV), and a capacitance (CA) having one terminal connected to the switch so as to be at the first potential when the switch is closed and to be at the second potential when the switch is open, the other terminal of the capacitance forming the transmitter output.

4.          A system according to claim 2 or 3 characterised in that said transmitters are so arranged that their quiescent output voltages are controlled by said enable signals.

5.          A system according to claim 1, 2, 3 or 4 characterised in that each said receiver switch comprises a single diode.

- 9 -

6.      A system according to any one of claims 1
to 5 characterised in that signals to the elements of
the active group in transmission are delayed by
delaying the application of said control signals to
the transmitters connected with the elements.

7.      A system according to claim 6 characterised
in that the system includes a tapped digital shift
register (D1) whose input is connected to a control
signal generator (P) and the outputs of the taps
of which are connected to the transmitters connected with the elements of the active group.

Fig.1.

Fig.2.

Fig.3.

+150v

TO M2

3/3

0617382

European Patent Office

**EUROPEAN SEARCH REPORT**

| Category | DOCUMENTS CONSIDERED TO·BE RELEVANT |||
|---|---|---|---|
| | Citation of document with indication, where appropriate, of relevant passages | | Relevant to claim |
| | DE – A1 – 2 508 478 (PHILIPS) <br> * fig. 2 * | | 1 |
| | –– | | |
| | ELECTRONICS, 29 April 1976 <br> F.E. HINKLE "Diodes switch high <br> power to protect sonar receiver" <br> * pages 98 and 99 * | | 2 |
| | –– | | |
| | DE – B1 – 2 628 492 (SIEMENS) <br> * fig. 3, position 10 * | | 7 |
| | –– | | |
| P | EP – A1 – 0 006 197 (F. HOFFMAN–LA ROCHE) <br> * fig. 21 * | | |
| | –– | | |
| A | DE – B1 – 2 733 920 (SIEMENS) <br> * fig. 1 to 5 * | | |
| | –– | | |
| A | DE – B2 – 2 618 178 (TOKYO SHIBAURA ELECTRIC CO.) <br> * fig. 8 * | | |
| | –– | | |
| | DE – B2 – 2 424 582 (TOKYO SHIBAURA ELECTRIC CO.) <br> * fig. 7 and 8 * | | 7 |
| | –– ...⁄... | | |

**CLASSIFICATION OF THE APPLICATION (Int. Cl.3)**

G 01 S 15/89
A 61 B 10/00

**TECHNICAL FIELDS SEARCHED (Int.Cl.3)**

A 61 B 10/00
G 01 N 29/00
G 01 S 15/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| The present search report has been drawn up for all claims ||||
|---|---|---|---|
| Place of search <br> Berlin | Date of completion of the search <br> 26-06-1980 | Examiner <br> BREUSING | |

EPO Form 1503.1   06.78

**Europäisches Patentamt**

**EUROPÄISCHER RECHERCHENBERICHT**

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| P | DE - A1 - 2 854 749 (GENERAL ELECTRIC) <br> * fig. 1 to 5 * <br> -- | | |
| A | DE - A1 - 2 749 442 (NATIONAL RESEARCH DEVELOPMENT CORP.) <br> * fig. 4 * <br> ---- | | |

**RECHERCHIERTE SACHGEBIETE (Int. Cl.3)**

EPA Form 1503.2  06.78